# EUROPÄISCHE PATENTSCHRIFT

(11) **EP 3 763 091 B1**
(45) Veröffentlichungstag und Bekanntmachung des Hinweises auf die Patenterteilung: **20.07.2022**
(21) Anmeldenummer: 19706515.4
(22) Anmeldetag: 18.02.2019
(51) Int. Cl.: H04L 12/40

(54) **VERFAHREN ZUR ÜBERTRAGUNG VON DATEN ÜBER EINEN KOMMUNIKATIONSKANAL, ENTSPRECHEND AUSGELEGTE VORRICHTUNG UND KOMMUNIKATIONSSCHNITTSTELLE SOWIE ENTSPRECHEND AUSGELEGTES COMPUTERPROGRAMM**
METHOD FOR TRANSMITTING DATA VIA A COMMUNICATIONS CHANNEL, CORRESPONDNGLY DESIGNED DEVICE AND COMMUNICATIONS INTERFACE, AS WELL AS A CORRESPONDINGLY DESIGNED COMPUTER PROGRAM
PROCÉDÉ DE TRANSMISSION DE DONNÉES VIA UN CANAL DE COMMUNICATION, DISPOSITIF ET INTERFACE DE COMMUNICATION CONÇUS DE MANIÈRE CORRESPONDANTE AINSI QUE PROGRAMME D'ORDINATEUR CONÇU DE MANIÈRE CORRESPONDANTE

(30) Priorität: 05.03.2018 DE 102018105007
(43) Veröffentlichungstag der Anmeldung: 13.01.2021
(73) Patentinhaber: Volkswagen AG, 38440 Wolfsburg (DE)
(72) Erfinder: KRIEGER, Olaf, 39291 Lostau (DE); MEIER, Alexander, 38442 Wolfsburg (DE)
(86) Internationale Anmeldenummer: PCT/EP2019/053915
(87) Internationale Veröffentlichungsnummer: WO 2019/170400

(56) Entgegenhaltungen:
- DE-A1-102009 006 898
- DE-A1-102014 214 457
- US-A1- 2006 171 410
- GEHRSITZ THOMAS ET AL: "Analysis of Medium Access Protocols for Power Line Communication Realizing In-Car Networks", 2014 IEEE 80TH VEHICULAR TECHNOLOGY CONFERENCE (VTC2014-FALL), IEEE, 14. September 2014 (2014-09-14), Seiten 1-7, XP032694910, DOI: 10.1109/VTCFALL.2014.6965879 [gefunden am 2014-11-24]
- GEHRSITZ THOMAS ET AL: "Priority-based energy-efficient MAC protocols for the in-car power line communication", 2014 IEEE VEHICULAR NETWORKING CONFERENCE (VNC), IEEE, 3. Dezember 2014 (2014-12-03), Seiten 61-68, XP032723543, DOI: 10.1109/VNC.2014.7013310 [gefunden am 2015-01-16]

## Beschreibung

Die Erfindung betrifft das technische Gebiet der Datenübertragung zwischen elektronischen Komponenten insbesondere Steuergeräten, Sensoren und Aktoren, die über ein Bussystem vernetzt sind. Solche Steuergeräte werden vielfach in Kraftfahrzeugen eingesetzt. Vernetzte Steuergeräte, Sensoren und Aktoren werden auch in anderen Gebieten der Technik eingesetzt, z.B. in der Automatisierungstechnik, Prozesstechnik, usw. Der Erfindung ist aber nicht auf die leitungsgebundene Datenübertragung beschränkt, sondern kann auch bei drahtlosen Datenübertragungssystemen eingesetzt werden. Die Erfindung betrifft ebenso eine entsprechend ausgelegte Kommunikationsschnittstelle sowie ein entsprechend ausgelegtes Computerprogramm.

In modernen Fahrzeugen werden eine Vielzahl von Steuergeräten verbaut. Alleine für den Antriebstrang werden eine Anzahl Steuergeräte eingesetzt, so z.B. Motor-Steuergerät, Getriebe-Steuergerät, ESP-Steuergerät, und weitere. Zu erwähnen ist auch die Klasse der Steuergeräte, die für Regelungen im Fahrwerksbereich zuständig sind. Solche sind Steuergeräte zur elektronische Fahrwerkeinstellung oder Steuergeräte zur Fahrdynamik-Regelung oder Steuergeräte, die als Lenkhilfe fungieren, wie z.B. die geschwindigkeitsabhängige Servolenkung. Daneben gibt es auch noch weitere Steuergeräte, die im Bereich der Fahrzeugkarosserie verbaut werden und für bestimmte Komfortfunktionen sorgen. Als Beispiele werden genannt die Tür- oder Fensterheber-Steuergeräte, Klimaanlage-Steuergeräte, Sitzverstellungs-Steuergeräte, Airbag-Steuergeräte u.a. Dann gibt es weiterhin die Klasse der Steuergeräte, die zu dem Infotainment-Bereich zählen, wie Kamera-Steuergerät zur Umfeldbeobachtung, Navigationsgerät, RADAR- oder LIDAR-Gerät, Kommunikationsmodul und Entertainmentmodul mit TV, Radio, Video und Musik-Funktion.

Es gibt den Trend in der Technik, dass für die fahrzeuginterne Vernetzung von Steuergeräten zukünftig vermehrt IP Kommunikation in Form von IPv6 oder IPv4 zum Einsatz kommen soll. Dabei werden IP-Pakete übertragen, die eine Länge von bis zu 64 kByte aufweisen können. Zwar können die IP-Pakete segmentiert übertragen werden, jedoch erfordert der Einsatz von IP Kommunikation, dass eine Bustechnologie verwendet wird, die hinreichend große Botschaften übertragen kann.

Typischerweise werden die Steuergeräte der verschiedenen Kategorien jeweils mit einem separaten, für die Gerätekategorie entsprechend ausgelegten Bus vernetzt. Es können daher mehrere verschiedene Bussysteme im Fahrzeug eingesetzt werden. Die verschiedenen Bussysteme können dabei über Gateways miteinander verbunden sein, um einen Datenaustausch zu ermöglichen. Im Bereich der Antriebstrang-Steuergeräte wird typischerweise der CAN-Bus eingesetzt, ebenfalls im Bereich der Komfort-Steuergeräte. Im Infotainment-Bereich kommen auch andere Bussysteme zum Einsatz, wie Bussysteme die auf Ethernet-Technologie beruhen. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus).

In Fahrzeugen und anderen Systemen im Bereich der Steuerungs- und Reglungstechnik kommen in zunehmendem Maße Vernetzungstechnologien auf Basis von Ethernet zum Einsatz. Das Ethernet-Bussystem stammt schon aus den frühen Tagen der Vernetzung von Computern und wurde am Palo Alto Research Center Xerox PARC in den späten 1970er Jahren entwickelt. Schon seit 1980 ist das Institute of Electrical and Electronics Engineers (IEEE) für die Pflege und Weiterentwicklung von Ethernet verantwortlich. Für Ethernet ist die Arbeitsgruppe 802 verantwortlich. Die Ethernet-bezogenen Standards werden deshalb mit einer führenden 802 gekennzeichnet (z.B. IEEE 802.1, IEEE 802.2, IEEE 802.3, etc.).

Dabei besteht eine große Stärke des Ethernets darin, dass fertige Protokolle für den Transport von vielfältigen Nutzdaten bestehen, wie Video- / Audio-Daten, usw. und, dass heute eine Vielzahl an physikalischen Medien unterstützt wird, die dessen Verwendung auch im Kraftfahrzeug erlauben. Da die physikalischen Medien vom Übertragungs-Protokoll unabhängig sind, können auch problemlos weitere Übertragungstechniken entwickelt und für Anforderungen aus der Automobilbranche angepasst werden.

In einem Ethernet-Netzwerk werden im Normalfall alle Nachrichten mit der gleichen Priorität verarbeitet. In Fahrzeugnetzwerken gibt es jedoch Kommunikationsverbindungen, die sehr kurze Kommunikations-Latenzzeiten erfordern. Andere Verbindungen haben dagegen nur sehr geringe Anforderungen an die Latenz.

Für den Kfz-Bereich wurden verschiedene Ethernet Varianten entwickelt. Zunächst gibt es die Varianten IEEE 100BASE-T1 und IEEE 1000BASE-T1. Dabei wird die Übertragung von Daten in Vorwärts- und Rückwärtsrichtung über nur ein verdrilltes Leitungspaar bewerkstelligt. Es gibt einen Physical Layer Block, der jeweils als eigener Baustein/Chip in einem Steuergerät (ECU) eingebaut werden kann. Dieser Block stellt die Verbindung zwischen physikalischem Medium (Netzwerkkabel) und dem Ethernet Controller Block her.

An einer Busleitung sind bei dieser Ethernet-Variante immer nur zwei Knoten angeschlossen. Als Topologie steht somit nur die Punkt-zu-Punkt-Verbindung zur Verfügung.

Mehr als zwei Knoten können mit Hilfe eines Koppelelements verbunden werden. Hier kommt üblicherweise ein Netzwerk-Switch zum Einsatz, der als Layer-2-Koppelelement die Anbindung an mehrere physikalische Verbindungen erlaubt und selbständig Botschaften von Zweig zu Zweig weiterleiten kann. Dies ist einer der größten Nachteile des Ethernet-Bussystems im Kfz-Bereich, weil es die Kosten in die Höhe treibt.

Deshalb dominierte im Kfz-Bereich der Einsatz des CAN-Busses (Controller Area Network) gemäß ISO-Norm. Der CAN-Bus wurde in den achtziger Jahren entwickelt und 1994 standardisiert. Die entsprechende ISO-Norm hat die Nummer ISO 11898. Dieser Bus ist im Kfz-Bereich deshalb so erfolgreich, weil er bei geringem Verkabelungsaufwand echtzeitfähig ist. Durch die Vergabe von Botschaftsprioritäten und deren Berücksichtigung bei der Busarbitrierung ist sichergestellt, dass sich immer die Botschaft mit der höchsten Priorität auf dem Bus durchsetzt. Nachteile sind aber die geringe Datenrate und eben wie schon erwähnt, die Schwierigkeiten in Verbindung mit der Übertragung von IP-Paketen.

Aus der US 2008/0175265 A1 ist ein Kanalzugriffsschema bekannt, das sowohl Prioritäten auf mehreren Ebenen als auch einen konfliktfreien Zugriffsindikator zur Verwendung durch eine Station in einem Netzwerk von Stationen aufweist.

Aus der US 6 167 030 A ist ein System und ein Verfahren zum Steuern der Zellenpriorität von Datenübertragungszellen, die von einer Zellenquelle an Netzwerkziele über eine Netzwerkverbindung übertragen werden, bekannt. Es handelt sich um ATM-Zellen eines ATM-Bussystems.

Aus der EP 0 258 604 B1 ist ein Token-Ring-Bus bekannt, bei dem die Priorität des Tokens aktualisiert wird, wenn ein Prioritätszugriff erforderlich ist. Ein Prioritätssignalisierungspaket wird auf den Ring-Bus gesendet. Dieses Prioritätssignalisierungspaket enthält empfangene Informationen bezüglich der bestimmten Prioritätsstufe, auf die das Token aktualisiert werden sollte.

DE 10 2014 214457 A1 beschreibt ein Verfahren zur seriellen Datenübertragung mittels Datenrahmen in einem Kommunikationsnetzwerk mit einer Mehrzahl von Stationen. Zuerst wird eine erste Prioritätsauflösung für durch die Mehrzahl von Stationen auf einen Kommunikationskanal zu übertragenden Datenrahmen ausgeführt. Wenigstens eine erste Station, welche einen Datenrahmen mit der höchsten Priorität zu übertragen hat, führt ein erstes Backoff aus. Falls der Kommunikationskanal nach dem Backoff frei ist, wird einen ersten Datenrahmen durch die eine erste Station gesendet und falls eine Bestätigung der Übertragung an die wenigstens eine erste Station ausbleibt wird die Priorität des ersten Datenrahmens angehoben.

DE 10 2009 006896 A1 beschreibt ein Verfahren zur Anzeige von Informationen auf einer Anzeigeeinheit in einem Fahrzeug. Die Informationen umfassen mehrere Informationen von mehreren unterschiedlichen Informationsquellen. Die Anzeigeeinheit umfasst einen Hauptanzeigebereich und mindestens einen Nebenanzeigebereich. Eine Informationsquelle wird durch einen Benutzer ausgewählt und die Informationen der ausgewählten Informationsquelle in dem Hauptanzeigebereich angezeigt. Weiterhin werden in jeweils einem Nebenanzeigebereich Informationen von zumindest einem Teil der nicht ausgewählten Informationsquellen angezeigt.

US 2006/0171410 A1 beschreibt eine auf dynamischen Prioritäten basierende Nachrichtenübertragungsvorrichtung. Die Vorrichtung umfasst einen Prioritätsspeicherblock zum Aufzeichnen von Prioritäten in einer Kommunikationsnetzwerkumgebung mit mehreren Knoten und zum Aufzeichnen der niedrigsten Priorität unter den Prioritäten, einen Kommunikationsbusüberwachungsblock zum Überwachen eines Kommunikationsbusses und zum Senden seiner Nachricht beim Kommunikationsbus verfügbar ist und ein Nachrichtenkollisionslösungsblock zum Lösen einer Nachrichtenkollision durch Überwachen der Nachrichtenübertragung. Wenn Nachrichten gleichzeitig von den anderen Knoten gesendet werden wird ihre Priorität mit denen der anderen Knoten verglichen. Das Vergleichsergebnis wird gesendet, wenn ihre Priorität höher ist als die der anderen Knoten. Ihre Nachricht wird nicht gesendet, wenn dies nicht der Fall ist. Zusätzlich umfasst die Vorrichtung ein Nachrichtenfilterblock zum Ausführen einer Filterung, indem beurteilt wird, ob ein Knoten eine bestimmte Nachricht basierend auf einer Kennung der bestimmten Nachricht verarbeiten muss oder nicht, und ein Prioritätsanpassungsblock zum Anpassen seine Priorität nach einer Vordefinition oder Regel.

Die wissenschaftlichen Artikel "Analysis of Medium Access Protocols for Power Line Communication Realizing In-Car Networks", Thomas Gehrsitz et al., 2014 IEEE 80th Vehicular Technology Conference, Seiten 1-7 und "Priority-based energy-efficient MAC protocols for the in-car power line communication", Thomas Gehrsitz et al., 2014 IEEE Vehicular Networking Conference, Seiten 61-68 beschreiben prioritätsbasierten Medium Access (MAC) Protokolle für Power Line Kommunikationen (PWC).

Es gibt Erweiterungen des Ethernet-Standards, durch die ein Netzwerkteilnehmer Prioritäten beim Senden berücksichtigen kann, wenn er zu einem Zeitpunkt mehrere Nachrichten in unterschiedlichen Warteschlange hat, die zu unterschiedlichen Kommunikationsverbindungen gehören. Erwähnt werden hier die Ethernet-Varianten IEEE 802.1Qxx, bei denen ein Netzwerkteilnehmer mehrere Sende-Warteschlangen einrichtet und bei jedem Sendevorgang die Möglichkeit hat, eine Nachricht aus der Warteschlange mit der höchsten Priorität auszuwählen. Die Variante IEEE 802.1Qbv wird gesondert hervorgehoben, bei der ein Verfahren spezifiziert ist, dass so funktioniert, dass das Senden von Nachrichten einer bestimmten Priorität nach einer bestimmten Anzahl von Nachrichten unterbrochen wird, um in regelmäßigen Abständen auch Nachrichten mit einer geringeren Priorität versenden zu können Dieses Verfahren wird als Traffic Shaper bezeichnet.

Bei IEEE 802.1Q werden bei der Priorisierung von Botschaften nur die eigenen, von der Station zu sendenden Botschaften berücksichtigt. Ein Sender kann in diesem Zusammenhang entweder die originäre Quelle einer Nachricht oder eine Netzwerkbridge sein, also ein Netzwerkteilnehmer sein, der Nachrichten von einem Netzwerksegment in ein anderes weiterleitet. In vielen Fällen werden Ethernet-basierte Netzwerke so ausgelegt, dass ein Netzwerksegment immer nur aus genau einem Sender und einem Empfänger besteht. Dabei kommen große Multiport-Bridges (auch als Ethernet-Switch bezeichnet) zum Einsatz, bei denen an jedem Port genau ein anderer Netzwerkteilnehmer (Endknoten oder Bridge-Port) mit einer Voll-Duplex-Verbindung, also mit einem dedizierten Kommunikationskanal pro Kommunikationsrichtung, angeschlossen ist. Für diese Art der Netzwerkauslegung reicht es i.d.R. aus, wenn die Prioritäten nur lokal im Sender berücksichtigt werden um die Nachrichten in einer sinnvollen Reihenfolge auf das Übertragungsmedium zu geben.

Es gibt jedoch auch Netzwerktechnologien bei denen in einem Netzwerksegment mehrere Teilnehmer vorhanden sind. Insbesondere soll die im Kraftfahrzeug so bewährte lineare Busstruktur unterstützt werden, wo mehrere Steuergeräte ohne den Einsatz von einem Netzwerk-Switch als Koppelelement vernetzt sind. Diese Busstruktur ist hinsichtlich des Verkabelungsaufwandes und der Kosten optimal. Seitens der IEEE Organisation wird eine verbesserte 10 Mbit/s Ethernet-Variante entwickelt um diesen Punkten gerecht zu werden. Dabei sollen sich die Busteilnehmer die zur Verfügung stehenden 10 MBit/s Bandbreite aufteilen. Das neue Übertragungsprotokoll soll ebenfalls echtzeitfähig sein. Gleichzeitig soll es dezentral administriert werden können. Das bedeutet, dass es nicht nötig sein darf alle Teilnehmer des Netzwerkes mit einer identischen Konfiguration zu versorgen. Dadurch lassen sich Entwicklungsaufwände deutlich reduzieren. In diesem Zusammenhang wurde das 10 Mbit/s Ethernet-Derivat IEEE 802.3cg entwickelt, bei dem alle Teilnehmer an einer gemeinsamen elektrischen Busleitung angeschlossen sind. Aber auch bei dieser Variante besteht noch das Problem die Prioritäten von Botschaften über das gesamte Netzwerksegment zu berücksichtigen, ohne dass es zu Buszugriffskonflikten kommt. Das gleiche Problem besteht auch bei Funk-Netzwerken bei denen alle Teilnehmer die gleiche Frequenz verwenden.

Die Erfindung setzt sich zum Ziel die beschriebenen Nachteile bei der Einführung von IP-Kommunikation im Bereich von Netzwerken mit linearer Busstruktur und auch bei Drahtlos-Netzwerken zu vermeiden. Insbesondere muss eine Priorisierung der zu übertragenden Botschaften ermöglicht werden.

Diese Aufgabe wird durch ein Verfahren zur Übertragung von Daten über einen Kommunikationsbus gemäß Anspruch 1, eine Vorrichtung zur Durchführung des Verfahrens gemäß Anspruch 10, eine entsprechend ausgelegte Kommunikationsschnittstelle gemäß Anspruch 11 sowie ein entsprechend ausgelegtes Computerprogramm gemäß Anspruch 12 gelöst.

Die Lösung besteht darin, dass die Daten mit einem Übertragungsrahmen über den Kommunikationskanal übertragen werden, wobei der Übertragungsrahmen wenigstens ein Priorisierungs-Feld für die Festlegung der Priorität der Botschaft und ein Daten-Feld aufweist, wobei das Priorisierungs-Feld zur Regelung des Buszugriffs durch Priorisierung der Botschaften dient. Die Lösung zeichnet sich dadurch aus, dass eine Buszugriffsteuerung eingesetzt wird, in der die Priorität wenigstens des letzten empfangenen Datenpaketes in einer Minimalprioritäten-Speicherzelle abgespeichert wird, wobei nach Empfang eines Paketes ein Timer gestartet wird, für den ein Timeout-Wert eingestellt wird. Der Timer wird bei Empfang eines folgenden Paketes wieder zurückgesetzt. Wenn eine Sendepause entsteht, wird der Timeout-Wert überschritten. Nach Erreichen des Timeout-Wertes findet zur Buszugriffssteuerung eine Dekrementierung des in der Minimalprioritäten-Speicherzelle gespeicherten Wertes statt. Weiterhin wird zur Buszugriffssteuerung beim Senden eines Paketes in der Sendestation überprüft wird, ob die Priorität des zu sendenden Paketes kleiner ist, als der in der Minimalprioritäten-Speicherzelle abgespeicherte Wert und es wird das Senden des Paketes unterbunden, wenn die Priorität des Paketes kleiner ist als der in der Minimalprioritäten-Speicherzelle abgespeicherte Wert. Der Vorteil besteht darin, dass durch sukzessives Herabsetzen des Wertes in der Minimalprioritätenspeicherzelle Teilnehmer, die im vorherigen Zyklus keinen Buszugriff durchführen konnten eine immer größere Chance bekommen ihr in der Warteschlange anstehendes Datenpaket zu übertragen. Auftretende Latenzzeiten werden dadurch verringert, so dass das Übertragungsverfahren auch für zeitkritische Anwendungen eingesetzt werden kann.

Die abhängigen Ansprüche beinhalten vorteilhafte Weiterbildungen und Verbesserungen der Erfindung entsprechend der nachfolgenden Beschreibung dieser Maßnahmen.

In einer bevorzugten Variante, erfolgt jeweils eine Dekrementierung des in der Minimalprioritäten-Speicherzelle gespeicherten Wertes um den Wert "Eins". Bei dieser Variante kann das Verhalten des Kommunikationssystems am besten simuliert werden und vorhergesagt werden.

In einer anderen Variante wird der Dekrementierungswert schrittweise erhöht nach dem zwei- oder mehrfachen Erreichen des Timeout-Wertes. Dadurch wird es erzielt, dass niederpriore Botschaften in Sendepausen schneller zum Zuge kommen und eher übertragen werden. In einer besonderen Form dieser Ausführungsvariante wird der Dekrementierungswert dabei schrittweise um den Wert "Eins" erhöht nach dem jeweiligen Erreichen eines Timeout-Wertes.

In einer anderen Variante findet statt der Dekrementierung des in der MinimalprioritätenSpeicherzelle gespeicherten Wertes bei Überschreitung des Timeout-Wertes eine Zurücksetzung des dort gespeicherten Wertes auf den Wert Null oder einen anderen Minimalwert statt. Nach dieser Variante können in einer Sendepause die niederprioren Botschaften noch schneller übertragen werden.

In einer weiteren Ausgestaltung des Verfahrens wird bei Empfang eines Datenpaketes statt des Prioritätswertes des empfangenen Datenpaketes ein höherer Prioritätswert, insbesondere der Prioritätshöchstwert, in der Minimalprioritäten-Speicherzelle abgespeichert. Hierdurch werden die hochprioren Botschaften bei dem Buszugriff besonders bevorzugt.

Schließlich kann es durch eine weitere Maßnahme erreicht werden, dass bei hoher Auslastung niederpriore Botschaften, die schon lange auf Übertragung warten mussten doch noch übertragen werden. Dafür wird der Prioritätswert eines Datenpaketes, das eine bestimmte Anzahl an Übertragungszyklen in einer Warteschlange abwarten musste und dennoch nicht übertragen wurde in der Sendestation einfach auf einen höheren Wert gesetzt.

Eine weitere Optimierung sieht vor, den Wertebereich für die verwendeten Prioritäten zu erhöhen und das Netzwerk so auszulegen, dass es keine zwei Netzwerkteilnehmer gibt, welche mit der gleichen Priorität senden. Dadurch kann bei der Netzwerkauslegung festgelegt werden, dass einer der konkurrierenden Kommunikationsteilnehmer immer bevorzugt wird.

Für eine entsprechend ausgelegte Vorrichtung zur Durchführung des vorgeschlagenen Verfahren und eine entsprechend ausgelegte Kommunikationsschnittstelle gelten die entsprechenden Vorteile wie im Zusammenhang mit den entsprechenden Verfahrensschritten erläutert.

Das Gleiche gilt für ein entsprechend ausgelegtes Computerprogramm, das bei Abarbeitung in einer Recheneinheit die Schritte des vorgeschlagenen Verfahrens zur Übertragung von Daten durchführt. Zwar spielen im Kfz-Bereich die Hardwarekosten eine zentrale Rolle, so dass hier hauptsächlich weniger leistungsfähige Mikrocontroller eingesetzt werden, die durch separate Netzwerk-Controller unterstützt werden, bei denen das Datenübertragungsprotokoll durch Spezial-Hardware realisiert wird. In anderen Bereichen, z.B. im Feldbusbereich für Automatisierungstechnik oder Prozesstechnik werden auch leistungsfähigere Mikrocontroller eingesetzt, für die dann auch die Softwarelösung zur Implementierung des erweiterten Datenübertragungsprotokolls in Betracht kommt.

Ausführungsbeispiele der Erfindung sind in den Zeichnungen dargestellt und werden nachfolgend anhand der Figuren näher erläutert.

Es zeigen:
- Fig. 1: ein Fahrzeug mit den Kfz-Elektronik-Komponenten für die Bereiche Antrieb, Fahrwerk und Fahrerassistenz;
- Fig. 2: ein Blockdiagramm für ein Fahrzeug-Bordnetzwerk für die Bereiche Antrieb, Fahrwerk und Fahrerassistenz;
- Fig. 3: ein Blockdiagramm für das Fahrzeug-Bordnetzwerk für den Bereich Fahrerassistenz;
- Fig. 4: eine Darstellung wie das PLCA Kollisionsvermeidungsverfahren funktioniert;
- Fig. 5: das detaillierte Übertragungsrahmen-Format eines Ethernets-Frames nach IEEE 802.1Q Spezifikation;
- Fig. 6: ein erstes Ausführungsbeispiel wie Botschaftsprioritäten für die Steuerung des Buszugriffs eingesetzt werden können;
- Fig. 7: ein zweites Ausführungsbeispiel wie Botschaftsprioritäten für die Steuerung des Buszugriffs eingesetzt werden können; und
- Fig. 8: ein drittes Ausführungsbeispiel wie Botschaftsprioritäten für die Steuerung des Buszugriffs eingesetzt werden können.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

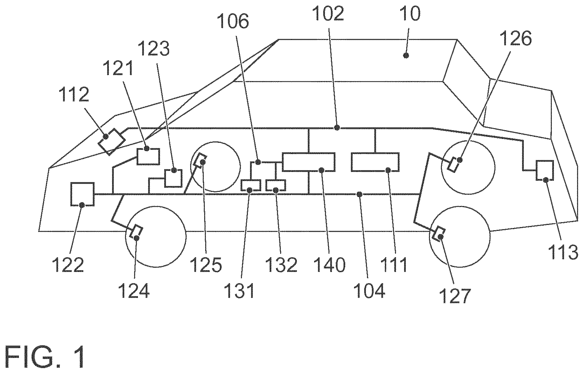

Fig. 1 zeigt ein Fahrzeug 10 mit verschiedenen elektronischen Komponenten. Dargestellt ist ein Personenkraftwagen Pkw. Als Fahrzeug kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Motorräder, Schienenfahrzeuge, usw. Die Erfindung wäre allgemein bei Landfahrzeugen, Schienenfahrzeugen, Wasserfahrzeugen und Luftfahrzeugen einsetzbar. Der Einsatz der Erfindung ist primär für den Fahrzeugbereich gedacht. Allerdings kommt wie beim CAN-Bus auch der Einsatz im Feldbus-Bereich, also in der Automatisierungstechnik, Prozesstechnik, usw. in Frage. Es wird eine Vielzahl von elektronischen Steuergeräten im modernen Kraftfahrzeug eingesetzt. In Fig. 1 ist die Vernetzung einiger Steuergeräte und Sensoren dargestellt. Dabei werden drei verschiedene Klassen von Steuergeräten unterschieden. Die Steuergeräte einer Klasse sind jeweils separat vernetzt. Verbunden sind die jeweiligen Kommunikationsbusse über ein zentrales Gateway-Steuergerät 140. Die Steuergeräte der Klasse der Steuergeräte für den Bereich Fahrerassistenz sind über den Bus 102 vernetzt. Daran angeschlossen sind die Steuergeräte Fahrerassistenz-Steuergerät 111, RADAR-Gerät 112 und Ultraschallsensor-Steuergerät 113. Dabei dient das RADAR-Gerät (entsprechend Radio Detection and Ranging) zur Realisierung eines Radartempomaten oder zur Realisierung eines Abstandswarnungs- oder Kollisionswarnungsgerätes. Dazu kann auch ein LIDAR-Gerät (entsprechend Light Detection and Ranging) ergänzend oder alternativ eingesetzt werden.

Die Steuergeräte der Klasse der Steuergeräte für den Antriebstrang sind über den Bus 104 vernetzt. Daran angeschlossen sind die Steuergeräte Motor-Steuergerät 121, ESP-Steuergerät 122 und Getriebe-Steuergerät 123. Weiterhin angeschlossen an den Bus 104 sind die Raddrehzahlsensoren 124 bis 127. Die Steuergeräte der Klasse der Steuergeräte für den Bereich Fahrwerk sind über den Bus 106 vernetzt. Daran angeschlossen sind die Steuergeräte Fahrwerk-Steuergerät 131 und Lenkhilfe-Steuergerät 122.

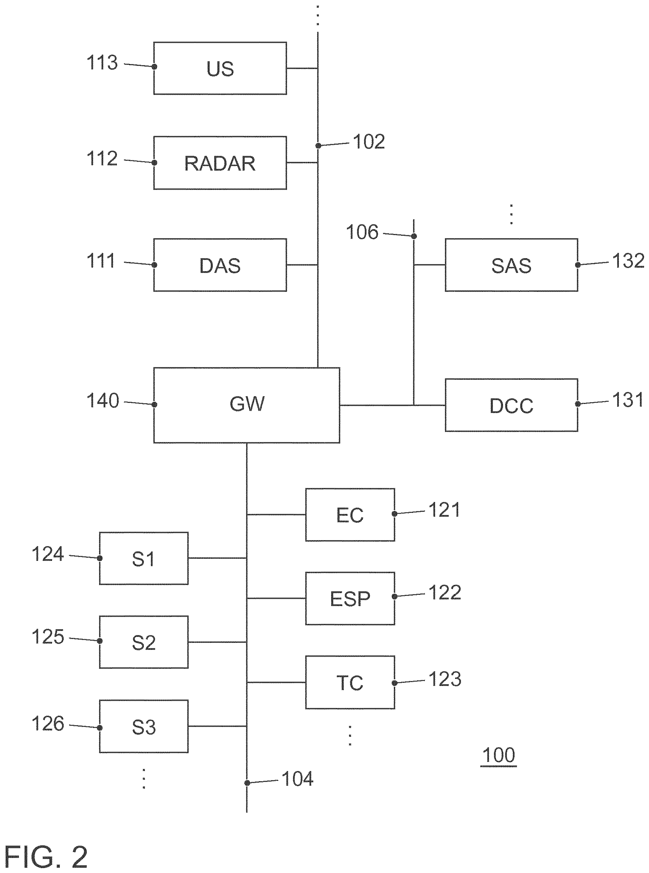

Fig. 2 zeigt das entsprechende Blockschaltbild für die Kfz-Elektronik in den Bereichen Antrieb, Fahrwerk und Fahrerassistenz. Gleiche Bezugszahlen bezeichnen in Fig. 2 dieselben Komponenten wie in Fig. 1. Die drei separaten Kommunikationsbusse 102, 104, 106 sind als lineare Busse ausgeführt. Dabei können die Busprotokolle für die Kommunikationsbusse 102, 104 und 106 nach den Bedürfnissen der dort vernetzten Steuergeräte ausgelegt sein. Z.B. könnte es sinnvoll sein den Kommunikationsbus 106 für den Bereich Fahrwerk mit höhere Datenrate auszulegen als die beiden Kommunikationsbusse 102 und 104. Auf Sensorsignale die für das Fahrwerk relevant sind, z.B. bei dem Komfortmerkmal Schlaglocherkennung muss extrem schnell reagiert werden um die die Dämpfereinstellung entsprechend anpassen zu können.

Zu dem Zweck, des Austausches von Daten zwischen Teilnehmern, die an unterschiedliche Kommunikationsbusse 102, 104, 106 angeschlossen sind, ist das Gateway 140 vorgesehen. Dieses ist mit allen drei verschiedenen Bussystemen 102, 104 und 106 verbunden. Das Gateway 140 ist dazu ausgelegt die Datenpakete, die es über den einen Kommunikationsbus empfängt, so umzusetzen, dass sie in dem Übertragungsformat des anderen Kommunikations-Busses dort weitergeleitet werden können. Wie dargestellt, ist das Gateway 140 als zentrales Gerät sowohl an den Bus 102, den Bus 104 als auch an den Bus 106 angeschlossen. Es übernimmt daher alle notwendigen Format-Umsetzungen, wenn Daten zwischen den verschiedenen Bussystemen ausgetauscht werden sollen.

Wie eingangs erwähnt, soll ein Kommunikationsbus eingesetzt werden, der es ermöglicht auch Datenpakete nach IPv4 oder IPv6-Protokoll zu übertragen. Dafür ist an sich der Einsatz einer Variante der Ethernet Standard-Familie sinnvoll. Hier gibt es schon fertige Übertragungsprotokolle wie IP (Internet Protocol), UDP (User Datagram Protocol), RTP (Real-Time Transport Protocol), TCP (Transmission Control Protocol) auf die zurückgegriffen werden kann. Der Entwicklungsaufwand, was die Übertragungsprotokolle anbelangt, hält sich dann in Grenzen. Die Ethernet-Netzwerk-Technologie entspricht weitestgehend der IEEE-Norm 802.3. Für den Einsatz dieser Technologie im Kraftfahrzeug ist, wie erwähnt, im Zusammenhang mit dieser Erfindung besonders die Variante IEEE 802.3cg interessant. Es wird deshalb im Zusammenhang mit der Offenbarung der Erfindung ausdrücklich auf diese Spezifikation Bezug genommen.

Als physikalisches Übertragungsmedium wird eine verdrillte Zweidrahtleitung verwendet, an der symmetrische Differenzspannungen für die Informationsübertragung angelegt werden. Die Spannungen repräsentieren Symbole, die ein Sender gemäß dem gewünschten Bitstrom erzeugt (kodiert). Ein Empfänger verwendet den entstandenen Symbolstrom wiederum, um die enthaltenen Bits zurück zu gewinnen (dekodieren).

Besonders attraktiv an dieser physikalischen Schicht ist, dass Informationen auf einem UTP-Kabel (ein Kabel mit einem verdrillten Leiterpaar ohne Abschirmung, entsprechend unshielded twisted pair) mit 10 Mbit/s übertragbar sind.

Im Gegensatz zu den existierenden Standards für 100Mbit/s und 1Gbit/s kommt ein gemeinsam genutzter Übertragungskanal (shared medium) zum Einsatz. Das bedeutet, dass zu einem Zeitpunkt nur maximal ein Netzwerkteilnehmer senden darf. (siehe Abbildung)
Aus den oben bereits beschriebenen Gründen wird der Kommunikationsbus 106 für den Bereich Fahrwerk nach der IEEE 802.3cg Variante ausgelegt und die beiden anderen Busse 102 und 104 können entweder auch nach dieser Variante ausgelegt werden oder nach einer der Varianten IEEE 100BASE-T1 oder IEEE 1000BASE-T1. Im Folgenden wird angenommen, dass auch der Kommunikationsbus 102 nach der Variante IEEE 802.3cg ausgelegt wird.

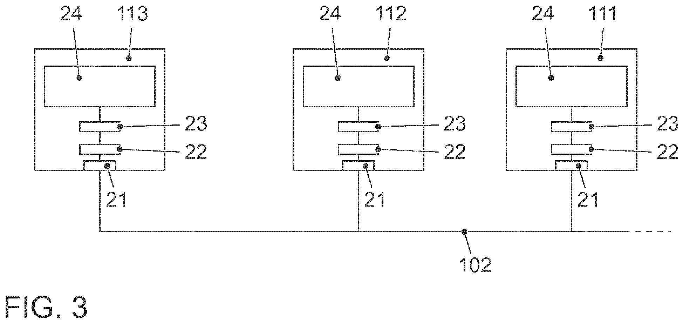

Das Prinzip der Vernetzung von elektronischen Komponenten mittels des Kommunikationsbusses gemäß der Erfindung ist in Fig. 3 näher dargestellt. Als Beilspiel wird der Kommunikationsbus 102 für den Bereich Fahrerassistenz gezeigt. Alle Steuergeräte 111 bis 113 sind an den Kommunikationsbus 102 angeschlossen. Ebenfalls ist noch das Gateway 140 an den Kommunikationsbus 102 angeschlossen (nicht mehr dargestellt). Die Busstruktur des Kommunikationsbusses 102 ist linear. Als Busleitung wird die schon erwähnte verdrillte, ungeschirmte UTP-Zweidrahtleitung genutzt.

Die Netzwerkteilnehmer bestehen typischerweise mindestens aus einem Mikrokontroller 24 auf dem die Applikationssoftware läuft und einer Kommunikationsschnittstelle. Ethernet-basierte Netzwerkschnittstellen bestehen aus einem PHY- (Physical Layer) und einem MAC-(Media Access Controller) Teil. Der PHY-Block ist dafür zuständig die digitalen Pakete, die vom MAC-Teil stammen in digitale Signale umzusetzen, die über das Übertragungsmedium übertragen werden. Der PHY-Block wird oft als separater Chip realisiert. Ebenfalls der MAC-Block kann als separater Chip realisiert werden. Darüber hinaus steuert der PHY den Zugriff auf das Übertragungsmedium, in dem er dafür sorgt, dass niemals zwei Teilnehmer gleichzeitig versuchen auf das Übertragungsmedium zu schreiben.

Im Beispiel von Fig. 3 ist in jedem Steuergerät 111 bis 113 noch ein Physical Layer Chip 22 vorhanden, der noch mit einer Busanpassschaltung 21 verbunden ist, zum Anschluss an die Busleitung. Mit der Bezugszahl 23 ist ein Ethernet MAC-Layer Chip (Media Access Controller) bezeichnet, der auch als Network-Controller bezeichnet wird. Mit der Bezugszahl 24 ist ein Mikrorechner bezeichnet, auf dem als Host IC die Anwendungssoftware installiert ist. Auch weitere Netzwerkprotokolle sind auf diesem Mikrorechner 24 installiert. Der Ethernet-MAC-Rahmen wird von Ethernet MAC-Layer geliefert. Der zugehörige Netzwerkprotokollstapel ist auf dem Mikrorechner 24 installiert.

Der MAC 23 generiert aus den zu übertragenen Daten den Ethernet-Datenrahmen und übergibt diesen bitweise (typ. vier Bit parallel) an den PHY 22 zur Übertragung sobald dieser signalisiert, dass er das Recht zum Schreiben auf das Übertragungsmedium besitzt. Nachrichten anderer Teilnehmer werden vom PHY 22 gelesen und bitweise an den MAC-Chip 23 übertragen. Der MAC 23 baut daraus ein Empfangs Ethernet-Datenrahmen zusammen und entscheidet, ob das Paket für ihn bestimmt war und weiterverarbeitet werden muss oder verworfen werden kann. Die zweite Schicht der Ethernet-Kommunikation stellt wichtige Grundfunktionen für eine geregelte Datenübertragung zur Verfügung. Hierzu gehören neben dem einheitlichen Botschaftsaufbau auch die Adressierung der Teilnehmer sowie das Buszugriffsverfahren. In einer Silicon on Chip-Implementierung SoC können alle Blöcke 21 bis 23 mit in dem Mikrocontroller 24 integriert sein.

Moderne MAC-Implementierungen besitzen mehrere Sende- und Empfangs-Warteschlangen mit unterschiedlichen Prioritäten. Ein Scheduler innerhalb des MAC 23 legt die Warteschlange fest, aus der das erste Element entnommen wird um übertragen zu werden. Für Echtzeitsysteme wie z.B. Steuerungs- und Regelungssysteme im Fahrzeug kommt dafür ein Strict Priority Scheduler zum Einsatz. Das führt dazu, dass immer zuerst die Nachrichten mit der höchsten Priorität übertragen werden und erst, wenn keine hochprioren Pakete mehr in der Warteschlange liegen, werden Pakete aus der Warteschlange mit der nächst niedrigeren Priorität übertragen.

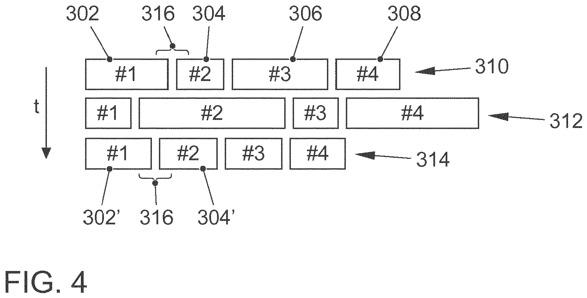

Für den schreibenden Zugriff auf das gemeinsame Übertragungsmedium ist der PHY zuständig. Um Kollisionen zu vermeiden, die beim gleichzeitigen schreibenden Zugriff mehrerer Teilnehmer auf das Übertragungsmedium entstehen, wird ein Kollisionsvermeidungsverfahren benötigt. Für den Einsatz in 10Mbit/s Automotive Ethernet wird das Verfahren PLCA (PHY Level Collision Avoidance) eingesetzt. In diesem Verfahren besitzt jeder Teilnehmer ein dediziertes Zeitfenster, in dem nur er Daten senden darf. Wenn der Sendevorgang abgeschlossen ist oder der Teilnehmer innerhalb einer vorbestimmten Zeit nicht mit dem Senden begonnen hat, ist der nächste Teilnehmer an der Reihe. Nach dem alle Teilnehmer die Möglichkeit hatten einen Frame zu senden, beginnt der Kommunikationszyklus von neuem. Dieser Vorgang ist in der Fig. 4 dargestellt.

In Fig. 4 sind die verschiedenen Sendezeitfenster 302, 304, 306, 308 nebeneinander angeordnet (Paketnummern #1 bis #4). Eine Zeile entspricht einem Kommunikationszyklus. In einem Kommunikationszyklus können die Teilnehmer nacheinander nach einem Round Robin-Verfahren zugreifen. Die maximale Paketlänge ist dabei aber begrenzt. In der Abbildung sind drei Kommunikationszyklen 310, 312, 314 dargestellt. Zwischen den Sendezeitfenstern ist eine Pause 316 definierter Länge, an der erkannt werden kann, dass die vorherige Sendung abgeschlossen ist. Die Dauer eines Sendezeitfensters 302, 304, 306, 308 hängt von der Menge der übertragenen Daten ab. Wenn ein Netzwerkteilnehmer keine Daten versendet, treten mehrere Pausen 316 hintereinander auf. Diese Art des Zugriffsverfahrens wird als Fair bezeichnet, weil alle Teilnehmer des Netzwerkes die gleiche Chance haben Pakete zu senden.

Bei dem PLCA-Verfahren können Prioritäten nur lokal, jedoch nicht Netzwerkweit durchgesetzt werden. Das bedeutet, der MAC-Chip 23 kann, wenn mehrere Pakete mit unterschiedlicher Priorität in der Station sendebereit zur Verfügung stehen, dafür sorgen, dass stets das Paket mit der höchsten Priorität zuerst übertragen wird. Es kann jedoch passieren, dass andere Teilnehmer das gemeinsame Übertragungsmedium mit Paketen niedriger Priorität blockieren. Da das Zugriffsverfahren wie oben beschrieben Fair ist, haben alle Teilnehmer das gleiche Recht Pakete zu senden, unabhängig davon wie hoch deren Priorität ist.

Für Echtzeitsysteme wie z.B. Steuerungs- und Reglungssysteme im Fahrzeug hat dieses Verhalten eklatante Nachteile. Für Echtzeitrelevante Daten wird stets eine maximal zulässige Latenz angegeben. Es wird daher ein Zugriffsverfahren benötigt, mit dem sichergestellt werden kann, dass höher-priore Pakete auch bei hoher Auslastung des Netzwerkes innerhalb einer vorgeschriebenen Zeit zugestellt werden können (Einhaltung der "Worst Case Latenz").

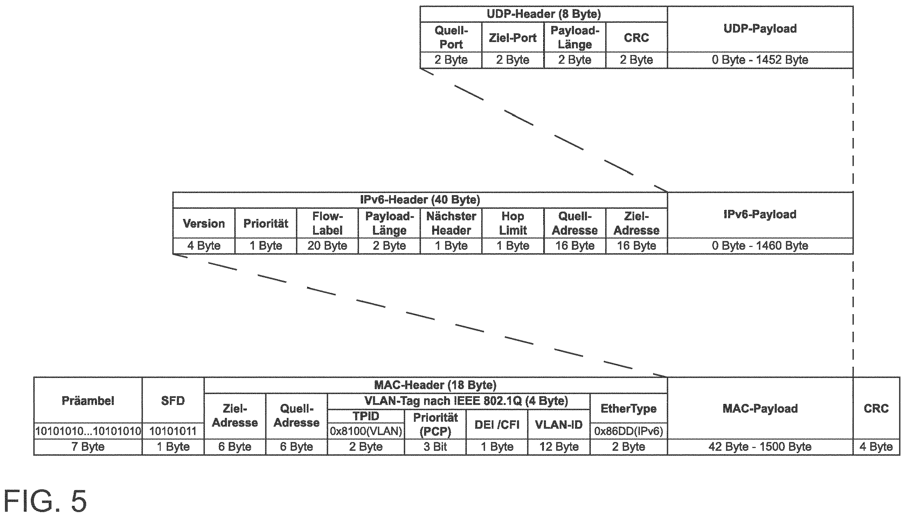

Fig. 5 zeigt zunächst das Übertragungsrahmen-Format das auch bei der Ethernet Busvariante IEEE 802.3cg eingesetzt wird. Es ist der sogenannte Tagged MAC-Frame dargestellt, der im Fahrzeugbereich bevorzugt wird. Im unteren Teil ist das Format eines Ethernet-Paketes bei dieser Variante gezeigt. Die beiden ersten Abschnitte Präambel und SFD sind dabei nur Teil des Ethernet-Paketes. Der eigentliche Ethernet-Frame, auch Ethernet MAC Frame genannt, beginnt erst danach. Für die Übertragung des Ethernet Frames fügt ein Ethernet PHY zu Beginn die Präambel sowie den Start Frame Delimiter (SFD) hinzu. Diese dienen bei IEEE 100BASE-T1 zur Signalisierung des Übertragungsbeginns, also zur oben bereits erwähnten Synchronisierung. Der Ethernet MAC-Frame besteht aus den Feldern MAC-Header, MAC Payload und CRC-Feld. Der MAC-Header besteht aus den Abschnitten für Ziel-Adresse, Quell-Adresse, VLAN-Tag, EtherType. In den Abschnitten Ziel-Adresse und Quell-Adresse wird jeweils die MAC-Adresse für Ziel und Quelle eingetragen. Eine Unterscheidung zwischen Basic und Tagged MAC Frame erfolgt mit dem Typfeld EtherType. Dieses kennzeichnet generell das enthaltene Paket im Payload-Bereich und gibt damit Auskunft über verwendete Protokolle in den höheren Schichten (z.B. IPv4, IPv6). Bei dem Tagged MAC Frame steht im Feld VLAN-Tag zu Beginn eine VLAN-Kennung (z.B. 0x8100). Ist diese vorhanden, so wird das Typfeld EtherType um vier Byte nach hinten verschoben und an dessen ursprünglicher Position der VLAN Tag eingefügt.

Ein VLAN Tag besteht aus einem Protocol Identifier (TPID) (entspricht der VLAN-Kennung) und einer Control Information (TCI). Die TCI besteht aus einer Priorität (PCP), einem Drop Eligible oder Canonical Form Indicator (DEI oder CFI) sowie einem Identifier (VID). In der Automobilbranche werden hauptsächlich Identifier VID und das Priorität-Feld PCP verwendet. Der Identifier VID kennzeichnet das jeweilige virtuelle Netzwerk für die unterschiedlichen Anwendungsbereiche. Die Priorität erlaubt die Optimierung von Laufzeiten durch Netzwerk-Switches, sodass wichtige Informationen bevorzugt weitergeleitet werden können. Im gezeigten Beispiel hat das Prioritätsfeld nur eine Länge von 3 Bit. Sollte ein anderes als das in IEEE 802.1Q beschriebene Nachrichten-Format eingesetzt werden, ist es auch möglich, das Prioritätsfeld auf eine größere Länge auszulegen. Bei einer Länge von 10 Bit wären Prioritätsabstufungen von 0 bis 1023 darstellbar.

Im Nutzdatenbereich des Ethernet Frame (MAC-Payload) können Informationen mit variabler Länge übertragen werden. Beim Tagged MAC Frame hat das Payload-Feld eine Mindestlänge von 42 Byte. Bei der Variante gemäß IEEE 100BASE-T1 Spezifikation können darin sogar bis zu 1500 Byte enthalten sein.

In das CRC-Feld am Ende des MAC Frames wird eine CRC-Prüfsumme übertragen. Der enthaltene Wert wird mit Hilfe eines standardisierten Algorithmus berechnet, der in Sender und Empfänger gleich implementiert ist. Die Berechnung erfolgt mit allen Feldern des Ethernet MAC Frames und sichert daher die gesamte Botschaft ab.

Im mittleren Teil der Fig. 5 ist das Format eines IPv6-Paketes mit einer Größe von 1500 Bytes gezeigt. Es findet komplett Platz im Nutzdatenfeld des Ethernet-MAC Frames.

Darüber ist ein UDP-Paket, entsprechend User Datagram Protocol, dargestellt. Es hat eine Länge von 1460 Byte und findet komplett Platz in dem Nutzdatenfeld des IPv6-Paketes.

Ein Verfahren bei dem auch die Prioritäten der Pakete bei dem Buszugriff Berücksichtigung finden ist in der früheren Patentanmeldung DE 10 2017 130 547.5 des gleichen Anmelders beschrieben. Jedes übertragene Datenpaket enthält eine Prioritätsinformation. Der Ethernet-Standard IEEE 802.1Q sieht dafür einen 3-Bit-Wert vor. In Fig. 5 wird das 3-Bit-Feld für die Priorität mit PCP bezeichnet. In den folgenden Beispielen wird von dem 3-Bit-Wert ausgegangen. Der Wert 0 entspricht der niedrigsten Priorität, der Wert 7 der höchsten Priorität.

Jeder Teilnehmer beobachtet die Daten auf dem Übertragungsmedium 208 und speichert den höchsten beobachteten Prioritätswert der letzten Kommunikationsrunde. Dies bedeutet: Wenn der Teilnehmer im Zeitfenster n senden darf, wertet er die Prioritätsinformationen aus den Zeitfenstern ab n+1 des letzten Kommunikationszyklusses sowie die Zeitfenster bis n-1 des aktuellen Kommunikationszyklusses aus. Bei dieser Anmeldung wurde die Prioritätsinformation des letzten von ihm gesendeten Paketes in einer Speicherzelle in dem PHY-Chip 22 gespeichert. In einer vorteilhaften Umsetzung des Verfahrens ging der PHY-Chip 22 von der Annahme aus, dass die Prioritäten im nächsten Kommunikationszyklus identisch mit denen im letzten Zyklus sind. Diese Annahme trifft vor allem dann zu, wenn zu übertragene Nachrichten zur Übertragung in mehrere kleinere Pakete aufgeteilt werden. Dort sendet der PHY-Chip 22 sein Datenpaket nur dann, wenn die Priorität des eigenen ausgewählten Pakets genauso hoch oder höher ist als die höchste beobachtete Priorität eines anderen Kommunikationsteilnehmers. Wenn die Priorität des eigenen Pakets geringer ist, verzichtet er auf das Recht zu Senden und blockiert dadurch nicht den gemeinsamen Kommunikationskanal mit einem niedrig-prioren Paket. Wenn sich alle Teilnehmer im Netzwerk an diese Vorgabe halten, können Nachrichten mit hoher Priorität übertragen werden, ohne dass sie von Paketen niedriger Priorität unterbrochen werden.

Das im Folgenden beschriebene Verfahren ist unabhängig vom tatsächlich eingesetzten physikalischen Übertragungsmedium und kann für verschiedene Geschwindigkeiten und sowohl für Leitungsgebundene Übertragung als auch drahtlose Übertragung eingesetzt werden.

Das Verfahren setzt voraus, das jeder Teilnehmer in einem Netzwerk technisch in der Lage ist, die Aussendungen der anderen Teilnehmer zu beobachten (Empfangen). Netzwerke mit diesen Eigenschaften werden als Broadcast-Medium bezeichnet.

Jede Nachricht, die in dem Netzwerksegment übertragen wird, besitzt eine Prioritätsinformation z.B. gemäß IEEE802.1Q. Alle Netzwerkteilnehmer werten aus allen auf dem Übertragungsmedium übertragenen Nachrichten die Prioritätsinformation aus. Jeder Teilnehmer besitzt eine Speicherzelle in der die aktuell zulässige Minimalpriorität abgespeichert ist. Der Wert dieser Speicherzelle wird bei jedem Empfang einer Nachricht sowie durch Ablauf eines Timers verändert bzw. aktualisiert. Die Speicherzelle wird aber in Abkehr von dem in DE 10 2017 130 547.5 vorgeschlagenen Verfahren im MAC-Chip 23 angeordnet. Dieses hat große Vorteile, was die Verarbeitung der Datenpakete nach dem OSI/ISO Schichtenmodell der Datenkommunikation angeht.

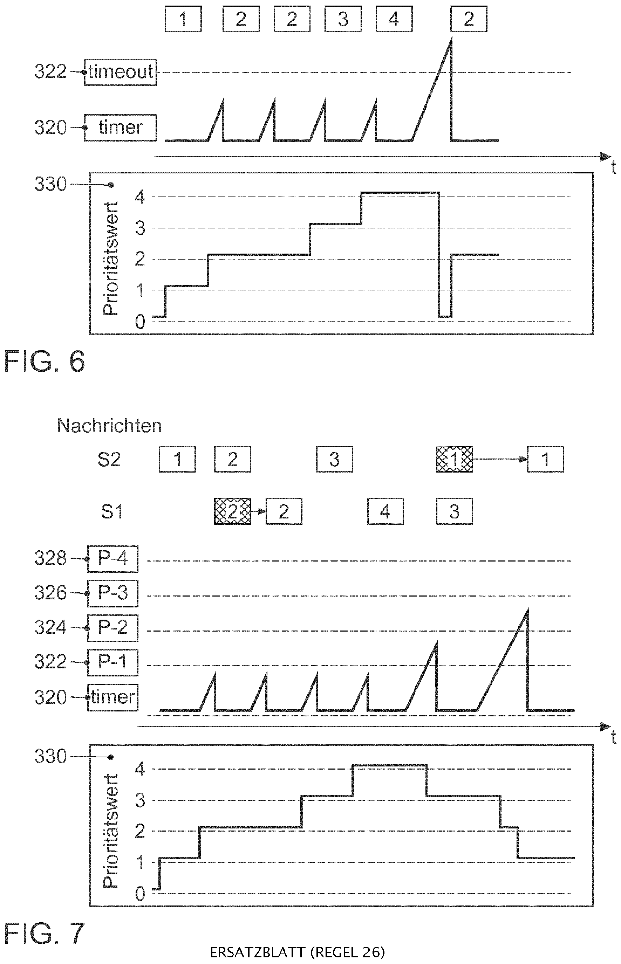

Wenn ein Netzwerkteilnehmer eine Nachricht mit einer bestimmten Priorität senden möchte, muss er zunächst überprüfen, ob die Priorität der zu sendenden Nachricht gleichgroß oder größer ist als der aktuelle Wert der zulässigen Minimalpriorität. Nachrichten mit gleicher oder höherer Priorität können sofort gesendet werden (sobald das Buszugriffsverfahren des Physical Layers signalisiert, dass das Übertragungsmedium zur Verfügung steht). Nachrichten mit einer niedrigeren Priorität werden zurückgehalten, bis der Wert der zulässigen Minimalpriorität auf ein Niveau abgesunken ist, das ein Senden erlaubt. Fig. 6 zeigt das Schema.

In der oberen Zeile sind die nacheinander übertragenen Datenpakete dargestellt. Bei jedem Paket ist angegeben, welche Priorität diesem Paket zugeordnet ist. Die Speicherzelle für die Minimalpriorität ist in der Fig. 6 mit der Bezugszahl 330 bezeichnet. Der untere Teil der Fig. 6 zeigt die jeweiligen Einträge in der Speicherzelle für den Wert der zulässigen Minimalpriorität. Wie beschrieben, wird dort jeweils eingetragen welche Priorität das zuletzt empfangene Datenpaket hatte. Am Anfang der Kommunikation ist der Wert in der Speicherzelle 330 auf Null gesetzt. Wenn auf dem Übertragungsmedium eine Nachricht mit der Priorität 1 beobachtet wird, wird der Wert auf 1 aktualisiert. Das Gleiche passiert beim Beobachten der Prioritäten 2 bis 4 in dem in Fig. 6 dargestellten Beispiel. Mit jedem Empfang einer Nachricht wird ein Timer 320 (Zeitzähler) zurückgesetzt. Er läuft dann an und wird bei Empfang eines neuen Paketes wieder zurückgesetzt. In der Fig. 6 ist gezeigt, dass der Timer 320 viermal anläuft und vor Erreichen des Timeout-Wertes wieder zurückgesetzt wird. Der Timeout-Wert kann in einer weiteren Speicherzelle 322 programmiert werden. Sollte der Timer 320 über einen längeren Zeitraum nicht zurückgesetzt werden, d.h. es wird der eingestellte Timeout-Wert überschritten, wird der Wert der zulässigen Minimalpriorität auf 0 zurückgesetzt. Dadurch können dann Nachrichten niedrigerer Priorität (im Bsp. folgt danach ein Paket mit Priorität 2) gesendet werden. Zur Vereinfachung der Abbildung wurde die Anzahl möglicher Prioritäten auf 4 beschränkt. In einer praktischen Umsetzung können jedoch die Werte bis Priorität 7 oder bei Vergrößerung des Feldes PCP beliebig viele Prioritäten umgesetzt werden. Die Speicherzellen 320 und 322 für den Timer und den Timeout-Wert sind ebenfalls in dem MAC-Chip 23 lokalisiert.

Bei der in Fig. 6 gezeigten Umsetzung fällt der Wert der Minimalpriorität nach Überschreiten des Timeout-Wertes auf den Wert Null zurück. Wenn in dieser Situation mehrere Netzwerkteilnehmer sendebereite Nachrichten haben, wird irgendein Teilnehmer als erster eine Nachricht senden. Dies ist nicht unbedingt der Teilnehmer der eine Nachricht mit hoher Priorität senden möchte. Es ist möglich, dass ein Teilnehmer mit einer niedrigen Priorität als erstes zum Senden kommt und ein Teilnehmer mit einer hochprioren Nachricht warten muss. Die Situation kann sich wiederholen, wenn nach der Nachricht mit der niedrigen Priorität ein anderer Teilnehmer eine andere Nachricht mit niedriger oder nur etwas höheren Priorität sendet. Dieses Verhalten wird als Prioritätsumkehr bezeichnet und kann beim Wechsel von einer hohen zu einer niedrigen Priorität zu einer schwer vorhersagbaren Verzögerung für hochpriore Nachrichten führen. Die im Folgenden beschriebene Variation des Verfahrens sieht daher vor, die Priorität nach Überschreiten des Timeouts nicht auf 0 zu setzen, sondern lediglich um einen bestimmten Wert zu dekrementieren.

Diese Variante ist in der Fig. 7 dargestellt. In der in Fig. 7 beschriebenen Umsetzung wird der Wert beim Überschreiten des Timeouts um genau den Wert "Eins" dekrementiert. Nach der doppelten Zeit erfolgt eine Reduzierung um den Wert "Zwei", dann "Drei", usw. Dadurch wird der Wert der zulässigen Minimalpriorität schrittweise bis auf den Wert "Null" reduziert.

In Fig. 7 ist ein System mit zwei Sendern dargestellt. Zu Beginn der dargestellten Nachrichtensequenz sendet Sender S2 eine Nachricht mit der Priorität 1. Danach versuchen gleichzeitig S1 und S2 eine Nachricht (mit einer Priorität die gleichgroß bzw. größer als die zulässige Minimalpriorität ist) zu senden. Das verwendete Buszugriffsverfahren sorgt dafür, dass nur eine der beiden Nachrichten tatsächlich gesendet wird. Die andere wird für einen späteren Zeitpunkt zurückgestellt. Im Zusammenhang mit Ethernet kann dafür das ältere CSMA/CD (Carrier Sense Multiple Access / Collision Detection) oder das zuvor erwähnte PLCA-Verfahren zum Einsatz kommen.

Nachdem der Wert der zulässigen Minimalpriorität in Fig. 7 den Wert 4 erreicht hat versuchen die beiden Stationen S1 und S2 gleichzeitig eine Nachricht mit den Prioritäten 3 und 1 zu senden. Durch die schrittweise Reduzierung der zulässigen Minimalpriorität kann S1 nach Überschreiten des Timeout seine Nachricht mit Priorität 3 senden, während der Sendewunsch von S2 weiterhin durch die beschriebene Vorrichtung unterdrückt wird. Erst nach erneuter zweifacher Überschreitung des Timeouts, wobei jeweils der zulässige Prioritätswert um den Wert "1" dekrementiert wird, kann S2 die Nachricht mit der Priorität 1 senden. Für den Fall, dass während der Wartezeit Nachrichten mit der Priorität zwei oder höher aufgetreten wären, hätten diese den Sendezeitpunkt für die Station S2 weiter verzögern können. Auch eine weitere Nachricht mit der Priorität 1 hätte dies bewirken können, da es beim Buszugriff wiederum zu einer Wettbewerbssituation kommt. In Fig. 7 ist dargestellt, dass der Timeout-Wert zweimal hintereinander überschritten wird. Um dies zu realisieren können weitere Speicherzellen 324, 326, 328 in dem Netzwerk-Controller-Chip 23 vorgesehen sein, wo die Timeout-Werte eingetragen sind, zu denen jeweils die Dekrementierung stattfinden soll.

Wenn zu einem bestimmten Zeitpunkt mehrere Netzwerkteilnehmer Nachrichten, mit einer Priorität gleich oder größer der zulässigen Minimalpriorität, senden möchten, entsteht bei beiden bisher beschriebenen Varianten eine nicht vorhersagbare Wettbewerbssituation (Race Condition), die lediglich durch das Buszugriffsverfahren aufgelöst wird. Dadurch entsteht ein zeitliches Verhalten, das nur sehr ungenau vorhergesagt werden kann.

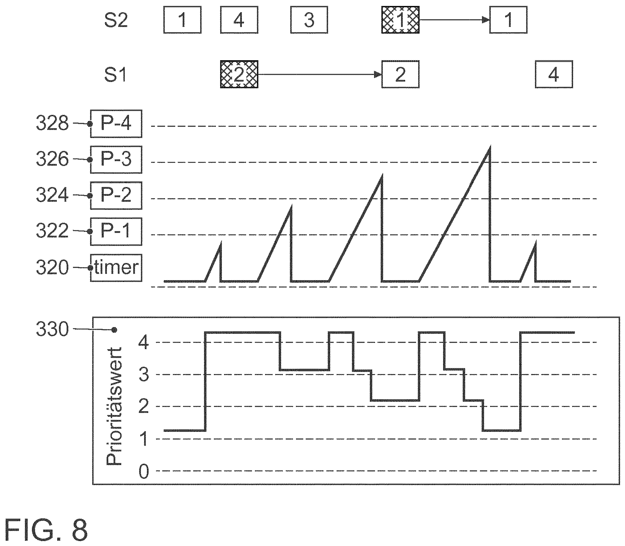

Deshalb wird im Folgenden noch eine weitere Variation beschrieben, die in Fig. 8 dargestellt ist. Diese Variation sieht vor, dass nach dem Empfang einer Nachricht der Wert für die zulässige Minimalpriorität in der Speicherzelle 330 nicht auf den Wert der empfangenen Nachricht, sondern immer auf den höchstmöglichen Wert eingestellt wird. Eine Reduzierung des Wertes erfolgt nur durch Überschreiten bzw. das mehrfache Überschreiten des Timeouts-Wertes.

Das führt dazu, dass nach Empfang einer Nachricht beliebiger Priorität zunächst nur Nachrichten mit der höchsten Priorität gesendet werden dürfen. Erst, wenn durch Abwarten der Timeout-Wert einfach oder mehrfach hintereinander überschritten wird, und so sichergestellt wurde, dass keine sendebereiten hochprioren Nachrichten existieren, können Nachrichten niedrigerer Priorität gesendet werden. Die Fig. 8 verdeutlicht das Verhalten. Nach dem Empfang bzw. Senden des ersten Paketes wird die Speicherzelle 330 auf den Wert "Vier" gesetzt. Station S2 kann senden. Die Speicherzelle 330 bleibt auf dem Wert "Vier". Nach einer Sendepause wird der Timeout-Wert P1 überschritten. Dann wird dekrementiert. In der Speicherzelle 330 wird der Wert "Drei" eingetragen. Nach Übertragung des Paketes mit Priorität 3 wird wieder der Wert "Vier" eingetragen. Dann wird nacheinander der Timeout-Wert P-1 und P-2 überschritten. Der Eintrag in der Speicherzelle 330 sinkt auf den Wert "Zwei" ab. Es wird das Paket mit Priorität 2 übertragen. Dann folgt eine längere Pause mit dreimaliger Überschreitung von Timeout-Werten P-1 bis P-2. Dadurch sinkt der Eintrag in der Speicherzelle 330 auf den Wert "Eins" ab. Das Paket mit Priorität 1 wird nach längerer Wartephase doch noch übertragen.

Durch die Anwendung des in Fig. 7 dargestellten Verfahrens kann sichergestellt werden, dass das Versenden von Nachrichten hoher Priorität stets mit der minimal möglichen Latenz geschieht. Die Latenz ergibt sich nur aus dem Sendeverhalten anderer Sender mit der gleichen Priorität sowie der Übertragungszeit einer beliebigen Nachricht, die zufällig auf dem Übertragungsmedium ist, und deren Ende abgewartet werden muss. Für die Betrachtung der Latenz von Nachrichten geringerer Priorität muss das Sendeverhalten der gleichen Priorität sowie aller höheren Prioritäten berücksichtigt werden.

Bei einer Implementierung gemäß Fig. 6 oder Fig. 7 ist es möglich eine lange Sequenz von Nachrichten gleicher Priorität mit der maximal verfügbaren Bandbreite zu realisieren. Bei einer Implementierung gemäß Fig. 8 ist dies nur für die höchste Priorität möglich. Bei niedrigeren Prioritäten muss zwischen den Nachrichten immer eine Pause zum Dekrementieren des Wertes der zulässigen Minimalpriorität erfolgen. Dadurch reduziert sich die verfügbare Bandbreite für Nachrichten niedriger Priorität.

Bei dem hier vorgestellten Verfahren entsteht ein schwer vorhersagbares Verhalten, wenn gleichzeitig mehrere Teilnehmer versuchen Nachrichten mit der gleichen Priorität zu senden. Die tatsächliche Reihenfolge, mit der die Nachrichten auf dem Kommunikationsmedium erscheinen, wird in diesem Fall durch das Buszugriffsverfahren geregelt. Wenn als Zugriffsverfahren CSMA/CD zum Einsatz kommt, können im Falle eines gleichzeitigen Zugriffs (Kollision) sehr hohe und schwer vorhersagbare Latenzzeiten entstehen. Das Zugriffsverfahren PLCA ist besser vorhersagbar. Es muss jedoch immer davon ausgegangen werden, dass der betreffende Netzwerkteilnehmer von allen konkurrierenden Teilnehmern als Letztes senden kann.

In einer Weiterbildung der Erfindung kann vorgesehen werden, den Wertebereich für die verwendeten Prioritäten zu erhöhen und das Netzwerk so auszulegen, dass es keine zwei Netzwerkteilnehmer gibt, welche mit der gleichen Priorität senden. Dadurch kann bei der Netzwerkauslegung festgelegt werden, dass einer der konkurrierenden Kommunikationsteilnehmer immer bevorzugt wird. Mit einem Prioritätsfeld von 10 Bit könnten z.B. 1024 Prioritäten umgesetzt werden.

Bei den hier vorgestellten Verfahren (alle Varianten) kann es passieren, das eine Nachricht mit niedrigerer Priorität nie die Möglichkeit bekommt gesendet zu werden, da innerhalb der nötigen Wartezeit es immer wieder passieren kann, dass Nachrichten mit höherer Priorität übertragen werden und die Warezeiten dann erneut beginnen.

Um dieses Problem zu lösen, wird hier noch eine weitere Optimierung vorgeschlagen. Der Ansatz besteht darin, dass die Priorität einer Nachricht die über einen längeren Zeitraum nicht gesendet werden kann, automatisch hochgesetzt wird.

Abhängig davon, welches Netzwerkverhalten benötigt wird, ist es sinnvoll alle der gezeigten Optionen des Verfahrens zu unterstützen und diese bei der Netzwerkauslegung zu konfigurieren. Der Timeout-Wert bzw. die Timeout-Werte sollten einstellbar sein. Es sollte möglich sein, die Schrittweite für die Dekrementierung einzustellen. Bei den beschriebenen Beispielen gemäß Fig. 6 und Fig. 7 ist die Schrittweite 1. Eine größere Schrittweite kann die Wartezeit für Nachrichten mit niedriger Priorität verringern, kann jedoch zu einer Prioritätsinversion innerhalb der Schrittgrenzen führen. Mit einem Algorithmus, der auf künstlicher Intelligenz beruht, könnte die Schrittweite jeweils oder periodisch geschätzt werden und angepasst werden um ein optimiertes Netzwerkverhalten zu erzielen. Diese Erweiterung ließe sich insbesondere bei einer Software-Lösung gut umsetzen.

Das beschriebene Verfahren kann als digitale Schaltung innerhalb des MAC-Chip 23 oder eines Chips, der als SoCs (System on Chip) alle Komponenten 21, 22, 23 und 24 enthält, implementiert werden. Die Speicherzelle 330 und der Timer 320 mit den Speicherzellen 322 bis 328 sind auch in dem MAC-Block 23 angeordnet. Es ist jedoch auch möglich, das Verfahren als Algorithmus in Software umzusetzen. Dafür muss der Algorithmus bei jedem Empfang einer Nachricht ausgeführt werden, unabhängig davon ob die Nachricht für den entsprechenden Netzwerkteilnehmer bestimmt ist oder nicht.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise werden das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

### Bezugszeichenliste

- 10: Fahrzeug
- 21: Busanpassschaltung
- 22: erweiterter Ethernet PHY-Block
- 23: Ethernet MAC Block
- 24: Mikrorechner
- 100: Kfz-Elektronik
- 102: Datenbus - Fahrerassistenz
- 104: Datenbus - Antrieb
- 106: Datenbus - Fahrwerk
- 111: Fahrerassistenz-Steuergerät
- 112: RADAR-Steuergerät
- 113: Ultraschallsensor-Steuergerät
- 121: Motor-Steuergerät
- 122: ESP-Steuergerät
- 123: Getriebe-Steuergerät
- 124: Raddrehzahl-Sensor
- 125: Raddrehzahl-Sensor
- 126: Raddrehzahl-Sensor
- 131: Fahrwerk-Steuergerät
- 132: Lenkhilfe-Steuergerät
- 140: Gateway
- 302- 308: Sendezeitschlitze
- 310- 314: Kommunikationszyklen
- 316: Wartezeit
- 320: Timer
- 322- 328: Speicherzellen für Timeout-Werte

## Patentansprüche

1. Verfahren zur Übertragung von Daten über einen Kommunikationskanal (106), bei dem die Daten mit einem Übertragungsrahmen übertragen werden, wobei der Übertragungsrahmen wenigstens ein Priorisierungs-Feld (PCP) für die Festlegung der Priorität der Botschaft und ein Daten-Feld aufweist, wobei das Priorisierungs-Feld (PCP) zur Regelung des Buszugriffs durch Priorisierung der Botschaften dient, **dadurch gekennzeichnet, dass** eine Buszugriffsteuerung eingesetzt wird, in der die Priorität wenigstens des letzten empfangenen Datenpaketes in einer MinimalprioritätenSpeicherzelle (330) abgespeichert wird, wobei nach Empfang eines Paketes ein Timer (320) gestartet wird, für den wenigstens ein Timeout-Wert eingestellt wird, der bei Empfang eines folgenden Paketes wieder zurückgesetzt wird, und wobei nach Erreichen des Timeout-Wertes eine Dekrementierung des in der MinimalprioritätenSpeicherzelle (330) gespeicherten Wertes erfolgt, und wobei zur Buszugriffssteuerung beim Senden eines Paketes überprüft wird, ob die Priorität des zu sendenden Paketes kleiner ist als der in der Minimalprioritäten-Speicherzelle (330) abgespeicherte Wert und das Senden des Paketes unterbunden wird, wenn die Priorität des Paketes kleiner ist als der in der Minimalprioritäten-Speicherzelle (330) abgespeicherte Wert.

2. Verfahren nach Anspruch 1, wobei jeweils eine Dekrementierung des in der Minimalprioritäten-Speicherzelle (330) gespeicherten Wertes um den Wert Eins erfolgt.

3. Verfahren nach Anspruch 1, wobei der Dekrementierungswert schrittweise erhöht wird nach dem zwei- oder mehrfachen Erreichen des Timeout-Wertes.

4. Verfahren nach Anspruch 3, wobei der Dekrementierungswert schrittweise um den Wert Eins erhöht wird nach dem jeweiligen Erreichen des Timeout-Wertes.

5. Verfahren nach Anspruch 1, wobei statt der Dekrementierung des in der Minimalprioritäten-Speicherzelle (330) gespeicherten Wertes eine Zurücksetzung des dort gespeicherten Wertes auf den Wert Null oder einen anderen Minimalwert erfolgt.

6. Verfahren nach einem der vorhergehenden Ansprüche, wobei bei Empfang eines Datenpaketes statt des Prioritätswertes des empfangenen Datenpaketes ein höherer Prioritätswert in der Minimalprioritäten-Speicherzelle (330) abgespeichert wird.

7. Verfahren nach einem der vorhergehenden Ansprüche, wobei der Prioritätswert eines Datenpaketes, das eine bestimmte Anzahl an Übertragungszyklen in einer Warteschlange abwarten musste und dennoch nicht übertragen wurde auf einen höheren Wert gesetzt wird.

8. Verfahren nach einem der vorhergehenden Ansprüche, wobei der wenigstens eine Timeout-Wert, die Dekrementierungsschrittweite, und / oder der Zurücksetzungswert programmierbar einstellbar ausgelegt werden.

9. Verfahren nach einem der vorhergehenden Ansprüche, wobei der Wertebereich für die Prioritätenvergabe vergrößert wird und die Prioritäten so vergeben werden, dass es keine zwei Netzwerkteilnehmer gibt, die Botschaften mit der gleichen Priorität versenden.

10. Vorrichtung für die Durchführung des Verfahrens nach einem der vorhergehenden Ansprüche, **dadurch gekennzeichnet, dass** die Vorrichtung eine MinimalprioritätenSpeicherzelle (330) aufweist, in der die Priorität wenigstens des letzten empfangenen Datenpaketes abgespeichert wird, und dass die Vorrichtung einen Timer (320) aufweist, der nach Empfang eines Datenpaketes gestartet wird, wobei für den Timer (320) wenigstens ein Timeout-Wert einstellbar ist, der bei Empfang eines folgenden Paketes wieder zurückgesetzt wird, und dass die Vorrichtung eine Dekrementierungsstufe aufweist, die nach Erreichen des Timeout-Wertes eine Dekrementierung des in der Minimalprioritäten-Speicherzelle (330) gespeicherten Wertes vornimmt und, dass die Vorrichtung eine Buszugriffssteuerungseinheit aufweist, die beim Senden eines Paketes überprüft, ob die Priorität des zu sendenden Paketes kleiner ist, als der in der Minimalprioritäten-Speicherzelle (330) abgespeicherte Wert und das Senden des Paketes unterbindet, wenn die Priorität des Paketes kleiner ist als der in der Minimalprioritäten-Speicherzelle (330) abgespeicherte Wert.

11. Kommunikationsschnittstelle aufweisend eine Vorrichtung, die ausgelegt ist die Schritte bei dem Verfahren nach einem der Ansprüche 1 bis 9 durchzuführen.

12. Computerprogramm, **dadurch gekennzeichnet, dass** das Computerprogramm ausgelegt ist bei Abarbeitung in einer Recheneinheit einer Busschnittstelle die Schritte des Verfahrens zur Übertragung von Daten nach einem der Ansprüche 1 bis 9 durchzuführen.

## Claims

1. Method for transmitting data via a communications channel (106), in which the data are transmitted with a transmissions frame, wherein the transmissions frame has at least one prioritization field (PCP) for determining the priority of the message and a data field, wherein the prioritization field (PCP) serves to regulate bus access by prioritizing the messages, **characterized in that** a bus access controller is used in which the priority of at least the last-received data packet is stored in a minimum-priorities storage cell (330), wherein, after reception of a packet, a timer (320) is started for which at least one time-out value is set and which is reset again when a following packet is received, and wherein, after the time-out value is reached, the value stored in the minimum-priorities storage cell (330) is decremented, and wherein, for bus access control when a packet is transmitted, a check is made as to whether the priority of the packet to be transmitted is lower than the value stored in the minimum-priorities storage cell (330), and transmission of the packet is prevented if the priority of the packet is lower than the value stored in the minimum-priorities storage cell (330).

2. Method according to claim 1, wherein, in each case, the value stored in the minimum-priorities storage cell (330) is decremented by the value of one.

3. Method according to claim 1, wherein the decrementation value is incrementally increased once the time-out value has been reached two or more times.

4. Method according to claim 3, wherein the decrementation value is incrementally increased by the value of one each time the time-out value is reached.

5. Method according to claim 1, wherein, instead of decrementing the value stored in the minimum-priorities storage cell (330), the value stored there is reset to the value of zero or to another minimum value.

6. Method according to one of the preceding claims, wherein, when a data packet is received, a higher priority value is stored in the minimum-priorities storage cell (330), instead of the priority value of the received data packet.

7. Method according to one of the preceding claims, wherein the priority value of a data packet which has had to wait in a queue for a certain number of transmission cycles and has not yet been transmitted is set to a higher value.

8. Method according to one of the preceding claims, wherein the at least one time-out value, the decrementation increment size, and/or the reset value are designed to be programmably adjustable.

9. Method according to one of the preceding claims, wherein the value range for the priority assignment is increased, and the priorities are assigned in such a way that there are no two network participants transmitting messages with the same priority.

10. Device for carrying out the method according to one of the preceding claims, **characterized in that** the device has a minimum-priorities storage cell (330) in which the priority of at least the last-received data packet is stored, **and in that** the device has a timer (320) which is started after reception of a data packet, wherein at least one time-out value, which is reset again when a subsequent packet is received, can be set for the timer (320), **and in that** the device has a decrementation level, which, once the time-out value has been reached, carries out a decrementation of the value stored in the minimum-priorities storage cell (330), and **in that** the device has a bus access controller which, when a packet is transmitted, checks whether the priority of the packet to be transmitted is lower than the value stored in the minimum-priorities storage cell (330) and prevents the transmission of the packet if the priority of the packet is lower than the value stored in the minimum-priorities storage cell (330).

11. Communications interface having a device that is designed to carry out the steps in the method according to one of claims 1 through 9.

12. Computer program, **characterized in that** the computer program, when processing in a computing unit of a bus interface, is designed to carry out the steps of the method for transmitting data according to one of claims 1 through 9.

## Revendications

1. Procédé de transmission de données via un canal de communication (106), dans lequel les données sont transmises avec une trame de transmission, la trame de transmission présentant au moins un champ de priorisation (PCP) pour la spécification de la priorité du message et un champ de données, le champ de priorisation (PCP) servant au réglage de l'accès au bus par la priorisation des messages, **caractérisé en ce qu'**une commande d'accès au bus est utilisée, dans laquelle la priorité au moins du dernier paquet de données reçu est mémorisée dans une cellule mémoire de priorité minimale (330), un temporisateur (320) étant lancé après la réception d'un paquet, pour lequel au moins une valeur de temporisation est réglée, laquelle est réinitialisée lors de la réception d'un paquet suivant et, une fois atteinte la valeur de temporisation, une décrémentation de la valeur mémorisée dans la cellule mémoire de priorité minimale (330) étant effectuée et, pour la commande de l'accès au bus, un contrôle étant effectué, lors de l'envoi d'un paquet, de si la priorité du paquet à envoyer est inférieure à la valeur mémorisée dans la cellule mémoire de priorité minimale (330) et l'envoi du paquet étant empêché si la priorité du paquet est inférieure à la valeur mémorisée dans la cellule mémoire de priorité minimale (330).

2. Procédé selon la revendication 1, dans lequel une décrémentation de la valeur mémorisée dans la cellule mémoire de priorité minimale (330) de la valeur un est effectuée.

3. Procédé selon la revendication 1, dans lequel la valeur de décrémentation est incrémentée par pas après l'atteinte d'un double ou multiple de la valeur de temporisation.

4. Procédé selon la revendication 3, dans lequel la valeur de décrémentation est incrémentée par pas de la valeur un après chaque atteinte de la valeur de temporisation.

5. Procédé selon la revendication 1, dans lequel, au lieu de la décrémentation de la valeur mémorisée dans la cellule mémoire de priorité minimale (330), une réinitialisation de la valeur qui y est mémorisée à la valeur zéro ou à une autre valeur minimale est effectuée.

6. Procédé selon l'une quelconque des revendications précédentes, dans lequel, lors de la réception d'un paquet de données, au lieu de la valeur de priorité du paquet de données reçu, une valeur de priorité supérieure est mémorisée dans la cellule mémoire de priorité minimale (330).

7. Procédé selon l'une quelconque des revendications précédentes, dans lequel la valeur de priorité d'un paquet de données qui a du attendre dans une file d'attente durant un nombre déterminé de cycles de transmission et qui n'a cependant pas été transmis est fixée à une valeur supérieure.

8. Procédé selon l'une quelconque des revendications précédentes, dans lequel l'au moins une valeur de temporisation, la largeur de pas de décrémentation et / ou la valeur de réinitialisation sont conçues pour être réglables par programmation.

9. Procédé selon l'une quelconque des revendications précédentes, dans lequel la plage de valeurs pour l'attribution de priorités est augmentée et les priorités sont attribuées de telle façon, qu'il n'existe pas deux membres du réseau qui envoient des messages ayant la même priorité.

10. Dispositif pour l'exécution du procédé selon l'une quelconque des revendications précédentes, **caractérisé en ce que** le dispositif présente une cellule mémoire de priorité minimale (330), dans laquelle la priorité au moins du dernier paquet de données reçu est mémorisée **et en ce que** le dispositif présente un temporisateur (320), qui est lancé après la réception d'un paquet de données, au moins une valeur de temporisation pouvant être réglée pour le temporisateur (320), laquelle est réinitialisée lors de la réception d'un paquet de données suivant **et en ce que** le dispositif présente un niveau de décrémentation qui effectue une décrémentation de la valeur mémorisée dans la cellule mémoire de priorité minimale (330) après l'atteinte de la valeur de temporisation et **en ce que** le dispositif présente une unité de commande d'accès au bus, qui contrôle, lors de l'envoi d'un paquet, si la priorité du paquet à envoyer est inférieure à la valeur mémorisée dans la cellule mémoire de priorité minimale (330) et empêche l'envoi du paquet, lorsque la priorité du paquet est inférieure à la valeur mémorisée dans la cellule mémoire de priorité minimale (330).

11. Interface de communication présentant un dispositif, lequel est conçu pour exécuter les étapes du procédé selon l'une quelconque des revendications 1 à 9.

12. Programme d'ordinateur, **caractérisé en ce que** le programme d'ordinateur est conçu pour exécuter, lors de son exécution dans une unité de calcul d'une interface de bus, les étapes du procédé de transmission de données selon l'une quelconque des revendications 1 à 9.
